# EUROPÄISCHE PATENTSCHRIFT

(11) **EP 1 246 039 B1**
(45) Veröffentlichungstag und Bekanntmachung des Hinweises auf die Patenterteilung: **03.10.2007**
(21) Anmeldenummer: 02006430.9
(22) Anmeldetag: 22.03.2002
(51) Int. Cl.: G05D 23/13

(54) **Sanitäres Thermostatventil**
Sanitary thermostatic valve
Robinet thermostatique sanitaire

(30) Priorität: 26.03.2001 DE 10115641
(43) Veröffentlichungstag der Anmeldung: 02.10.2002
(73) Patentinhaber: Hansgrohe AG, 77761 Schiltach (DE)
(72) Erfinder: Lorch, Werner, 78713 Schramberg (DE); Ginter, Andreas, 78713 Schramberg-Heiligenbronn (DE); Schönweger, Alois, 77761 Schiltach (DE)
(74) Vertreter: Patentanwälte Ruff, Wilhelm, Beier, Dauster & Partner

(56) Entgegenhaltungen:
- WO-A-79/00697

## Beschreibung

Die vorliegende Erfindung betrifft ein sanitäres Thermostatventil.

Derartige Thermostatventile, wie sie beispielsweise auch aus der EP 0 697 551 B1 bekannt sind, weisen eine Zufuhr für Kaltwasser und eine Zufuhr für Warmwasser sowie einen Auslass für Mischwasser auf. Das Mischwasser beaufschlagt dabei ein temperaturempfindliches Regelelement. Von dem Regelelement verschiebbar gehalten ist ein Ventilelement. Das Ventilelement begrenzt mit seinen gegenüberliegenden Enden jeweils mit einem ortsfesten Ventilsitz zusammen einen Regelspalt für das Kalt- bzw. Warmwasser. Über eine mittels eines Drehgriffs manuell betätigbare Temperatur-Vorwahleinrichtung wird das Soll-Verhältnis zwischen der Spaltöffnung des Regelspaltes für Kaltwasser zur Spaltöffnung des Regelspaltes für Warmwasser verändert. Dies verändert die Anteile von Kaltwasser und Warmwasser an dem Mischwasser und damit wird die Mischwassertemperatur selbst beeinflusst. Hierzu wirkt die Temperatur-Vorwahleinrichtung mit einer Schraubbuchse zusammen, wobei mittels der Schraubbuchse die Relativlage zwischen Regelement und Abstützung des Regelelements am Ventilgehäuse veränderbar ist. Somit ist auch die Lage des Ventilelements bezüglich der Dichtkanten veränderbar.

Dabei ist es beispielsweise aus der EP 0 697 551 B1 bekannt, eine Einstellvorrichtung für das sanitäre Thermostatventil vorzusehen, wobei über die Einstellvorrichtung die Lage des Regelelements bezüglich der gehäuseseitigen Abstützung verändert wird, wofür insbesondere die Vorspannung einer das Regelelement am Ventilgehäuse abstützenden Regelfeder beeinflusst wird. Dies geschieht beispielsweise dadurch, dass die Vorspannung einer Überlast-Sicherungsfeder verändert wird, die gegenüber der Regelfeder eine deutlich höhere Federkonstante aufweist. Dadurch wird das Regelelement, das zwischen der Regelfeder und der Feder der Überlast-Sicherung gehalten ist - da die Überlastfeder der Überlastsicherung auf der Seite der Abstützung des Temperatur-Regelelements an der Temperatur-Vorwahleinrichtung angeordnet istin seiner Relativlage zum Gehäuse verändert.

Die Veränderung der Vorspannung der starren Druckfeder der Überlast-Sicherung und damit auch der Lage des Abstützpunktes des Regelelements auf Seiten der Temperatur-Vorwahleinrichtung beeinflusst die Vorspannung der relativ weichen Regelfeder, über die das Regelelement am Ventilgehäuse abgestützt ist. Werden die Vorspannungsverhältnisse zwischen diesen beiden Federn verändert, so verändert sich auch der Gradient der Kennlinie, die die Zuordnung zwischen einer Veränderung der Temperatur-Vorwahleinrichtung und der ausströmenden Wassertemperatur kennzeichnet. Dieser Gradient ist jedoch eine wesentliche Einflussgröße für die Bedienbarkeit des Thermostatventils. Es muss einerseits eine große Feinabstimmbarkeit für die Temperatur des Mischwassers vorgesehen sein. Hierzu ist es erforderlich, dass der Gradient keine zu große Steigung aufweist, so dass eine kleine Bewegung des manuell betätigbaren Drehgriffes auch nur eine relativ geringe Temperaturänderung des Mischwassers bewirkt. Andererseits ist der Gradient nach unten durch den maximalen Verstellweg des manuell betätigbaren Drehgriffes begrenzt, da innerhalb dieses Verstellweges die Bandbreite möglicher Mischungsverhältnisse möglichst weitgehend ausgeschöpft werden soll.

Bei den Thermostatventilen soll dabei möglichst durch Überlastsicherung stets gleiche Wahl der Vorspannung der harten Feder und der hierzu relativ weichen Regelfeder gewährleistet sein, dass alle Thermostatventile stets die gleiche Regelkennlinie aufweisen. Dadurch lernt der Benutzer intuitiv bei allen Thermostatventilen die gleiche Kennlinie auswendig, er weiß also, wenn er unterschiedliche Armaturen mit den Thermostatventilen benutzt, dass die gleiche Stellung des manuell betätigbaren Drehgriffes auch im wesentlichen der gleichen Mischwassertemperatur entspricht.

Diese stets konstante Zuordnung zwischen der Mischwassertemperatur und der Stellung des Drehgriffes kann dann nicht aufrecht erhalten werden, wenn zur Einstellung des Mischventils die Federvorspannung verändert wird, wie dies in der EP 0 697 551 B1 vorgeschlagen wird.

Andererseits ist es jedoch nachteilig, dass dann, wenn das zuströmende Warmwasser eine sehr hohe Vorlauftemperatur aufweist, in bestimmten Stellungen des manuell betätigbaren Drehgriffes, nämlich den Stellungen, in denen eine höchstens geringfügige Beimischung von Kaltwasser im Mischwasser enthalten ist, die Wassertemperatur des Mischwassers zu hoch ist.

Es ist bereits ein sanitäres Thermostatventil nach dem ersten Teil des Anspruchs 1 bekannt (WO79/00697). Zum Ändern der Einstellung des Ventilwegbegrenzungsmittels muss der Griff abgenommen und eine Madenschraube betätigt werden.

Aufgabe der Erfindung ist es daher, ein sanitäres Thermostatventil zu schaffen, bei dem die Höchsttemperatur des Mischwassers begrenzbar ist, ohne jedoch Einfluss auf die Kennlinie zwischen der Betätigungsstellung des manuell einstellbaren Drehgriffes der Temperatur-Vorwahleinrichtung und der Mischwassertemperatur zu nehmen.

Diese Aufgabe wird durch ein sanitäres Thermostatventil gemäß dem Anspruch 1 gelöst.

Ein sanitäres Thermostatventil gemäß der Erfindung weist eine Zufuhr für Kaltwasser und eine Zufuhr für Warmwasser sowie einen Auslass für Mischwasser auf. Ein temperaturempfindliches Regelelement ist vorgesehen und wird von dem Mischwasser thermisch beaufschlagt. Es ist ein von dem Regelelement verstellbares Ventilelement vorgesehen, das an den gegenüber-liegenden Enden jeweils mit einem ortsfesten Ventilsitz einen Regelspalt für Kalt- und Warmwasser begrenzt. Mittels eines Drehgriffs ist eine Temperatur-Vorwahleinrichtung betätigbar. Die Temperatur-Vorwahleinrichtung wirkt mit einer Schraubbuchse so zusammen, dass mittels der Schraubbuchse die Relativlage zwischen Regelelement und Abstützung des Regelelements und somit die Lage des Ventilelements bezüglich der Dichtkanten veränderbar ist.

Gemäß der Erfindung ist darüber hinaus ein einstellbares Ventilwegbegrenzungsmittel vorgesehen, mittels dessen der Ventilweg des Ventilelements dahingehend begrenzbar ist, dass eine maximale Temperatur des Mischwassers nicht überschritten wird. Falls die Temperatur des einströmenden warmen Wassers höher ist als diese Temperatur, kann dies dadurch erreicht werden, dass der Regelspalt für die Kaltwasserzufuhr nicht vollständig versperrbar ist. Dabei ist das Regelelement so ausgebildet, dass die Zuordnung zwischen Stellung der Temperatur-Vorwahleinrichtung und Ventilstellung bezüglich einer Veränderung der Stellung des Ventilbegrenzungsmittels invariant ist.

Gemäß einer vorteilhaften Ausgestaltung der Erfindung ist das Ventilwegbegrenzungsmittel derart ausgebildet, dass es einstellbar, insbesondere stufenlos einstellbar ist. Durch die Einstellbarkeit ist es möglich, die Stellung des Ventilbegrenzungsmittels an die in den tatsächlichen Fall vorliegende Vorlauftemperatur des Warmwassers anzupassen. Ist diese Wassertemperatur des zugeführten warmen Wassers ausreichend gering, kann es auch möglich sein, das Ventilwegbegrenzungsmittel so einzustellen, dass tatsächlich keine Begrenzung des Ventilweges erfolgt und ein komplettes Abschließen des Regelspaltes für die Kaltwasserzufuhr möglich ist. Liegen die Vorlauftemperaturen des zugeführten warmen Wassers in einem sehr hohen Temperaturbereich, so muss der minimal mögliche Regelspalt für die Kaltwasserzufuhr, der offen bleibt, größer gewählt werden, als bei niedrigeren Vorlauftemperaturen der Warmwasserzufuhr.

Gemäß der Erfindung ist es besonders vorteilhaft, wenn die Ventilwegbegrenzungsmittel frei von zwischen der Betätigungsspindel und feststehenden Teilen wirkenden Rast- und Anschlagmitteln sind. Diese Maßnahme stellt sicher, dass die Wirkung des Ventilwegbegrenzungsmittels nicht an dem Betätigungselement der Temperaturwahlvorstelleinrichtung fühlbar ist. Dabei ist es aus konstruktiven Gründen und aus Gründen der Herstellbarkeit des sanitären Thermostatventils vorteilhaft, wenn die Verstellung des Ventilbewegungsbegrenzungsmittels koaxial zur Bewegung der Schraubbuchse erfolgt.

Es ist aber ebenfalls möglich und liegt im Rahmen der Erfindung, dass zur Begrenzung der Ventilbewegung ein an der Außenseite des Gehäuses angeordnetes Anschlagmittel vorhanden ist, das mit der Verstelleinrichtung für die Solltemperatur zusammenwirkt.

Gemäß einer vorteilhaften Ausgestaltung der Erfindung wird das Ventilwegbegrenzungsmittel durch eine Stellschraube gebildet, die in einer Bohrung des Ventilgehäuses angeordnet ist. Dies ist eine besonders einfache Möglichkeit der Herstellung eines erfindungsgemäßen Ventilweg-begrenzungsmittels. Die Bohrung im Ventilgehäuse führt dabei vorteilhafter Weise von der Seite des Drehgriffes her bis in den Bewegungsraum einer zwischen Ventilgehäuse und Betätigungsspindel angeordneten Gewindemutter. Die in diesen Bewegungsraum hineinragende Stellschraube begrenzt den Weg der Gewindemutter in Richtung einer Bewegung, die dem Schließen des Regelspaltes für die Kaltwasserzufuhr entspricht und begrenzt dadurch auch den maximalen Bewegungsweg der Stellschraube in dieser Richtung.

Gemäß einer alternativen Ausgestaltung eines Ventilwegbegrenzungsmittels ist dieses zwischen Betätigungsspindel und Schraubbuchse angeordnet, wobei der Verfahrweg der Schraubbuchse bezüglich der Betätigungsspindel derart begrenzbar ist, dass die Relativlage zwischen Regelelement und Abstützung des Regelelements dahingehend einstellbar ist, dass der Regelspalt für die Kaltwasserzufuhr nicht vollständig versperrbar ist.

Bei einem solchen, zwischen Betätigungsspindel und Schraubbuchse angeordneten Ventilwegbegrenzungsmittel kann es sich insbesondere um einen innerhalb der Betätigungsspindel angeordneten Anschlagkolben handeln. Der Anschlagkolben ist dabei vorzugsweise am Ende einer Stellschraube ausgebildet. Die Stellschraube kann dabei innerhalb des Griffbefestigungsschaftes der Betätigungsspindel gehalten sein. Soweit dieser Griffbefestigungsschaft der Betätigungsspindel eine durchgehende Bohrung aufweist, wobei im Inneren dieser Bohrung zum einen die Stellschraube angeordnet ist und zum anderen die Griffbefestigungsschraube gehalten werden kann, ist es auch möglich, die Stellschraube zu betätigen und somit eine Einstellung der Lage des Ventilwegbegrenzungsmittels vorzunehmen. Es werden Ausgestaltungen bevorzugt, bei denen zwischen Ventilwegbegrenzungsmittel und Betätigungsspindel eine Dichtung vorgesehen ist. Diese Dichtung kann sowohl im Bereich der Stellschraube angeordnet sein als auch im Bereich des Anschlagkolbens.

Besonders vorteilhaft ist es, wenn die Stellschraube von außen zugänglich ist. Dies gilt nicht nur für den Fall, dass die Stellschraube an der Betätigungsspindel gehalten ist, dies gilt auch für den Fall, dass die Stellschraube in einer Bohrung des Ventilgehäuses gehalten ist.

Vorzugsweise weist ein sanitäres Thermostatventil gemäß der Erfindung auch eine Überlastsicherungseinrichtung auf, an der das Regelelement abgestützt ist. Hierzu dient insbesondere eine zwischen zwei Federtellern eingespannte, verhältnismäßig starre Druckfeder, die bei Auftreten unzulässiger Arbeitszustände, insbesondere einer Übertemperatur am Regelelement unter axialer Bewegung eines Federtellers, der vorzugsweise in der Schraubbuchse angeordnet ist, komprimierbar ist.

Die vorstehenden und weiteren Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird.

Im übrigen wird die Erfindung anhand der Zeichnung dargestellten Ausführungsbeispiele näher erläutert. Dabei zeigt:
- Fig. 1: in Querschnittsdarstellung ein sanitäres Thermostatventil mit einem in der Betätigungsspindel angeordneten Anschlagkolben;
- Fig.: 2 eine vergrößerte Ausschnittsdarstellung der Fig. 1 im Bereich des Anschlagkolbens und der Durchführung der Betätigungsspindel durch das Ventilgehäuse;
- Fig. 3: eine zweite Ausführungsform der Erfindung, bei der in dem Ventilgehäuse eine Bohrung vorgesehen ist, in der eine Stellschraube als Ventilwegbegrenzungsmittel angeordnet ist;
- Fig. 4: schematisch einen Schnitt durch einen Teil des Thermostatventils nach einer weiteren Ausführungsform;
- Fig. 5: eine Stirnansicht von rechts in Figur 4.

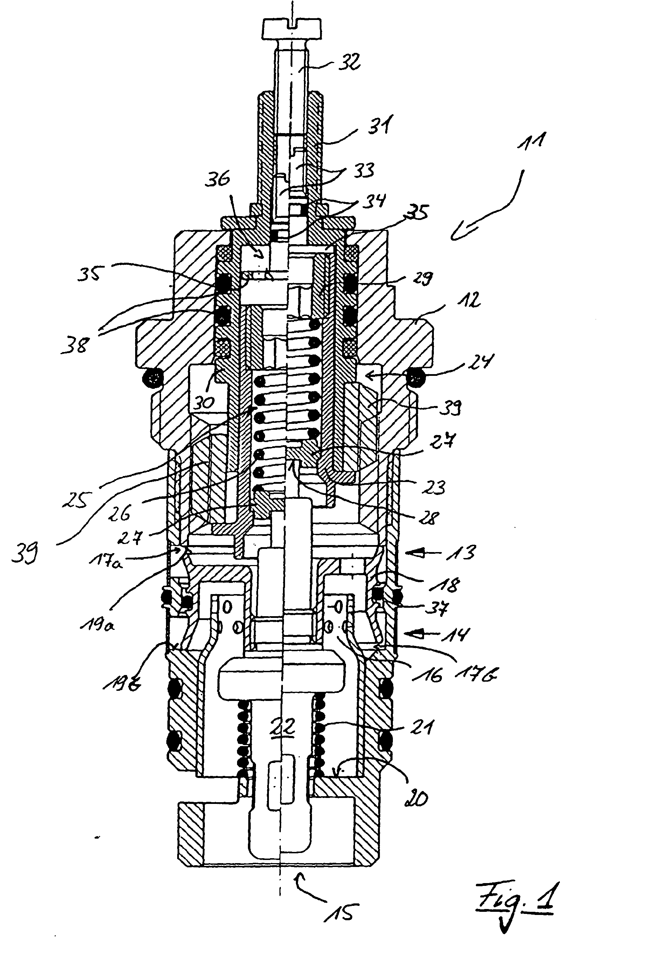

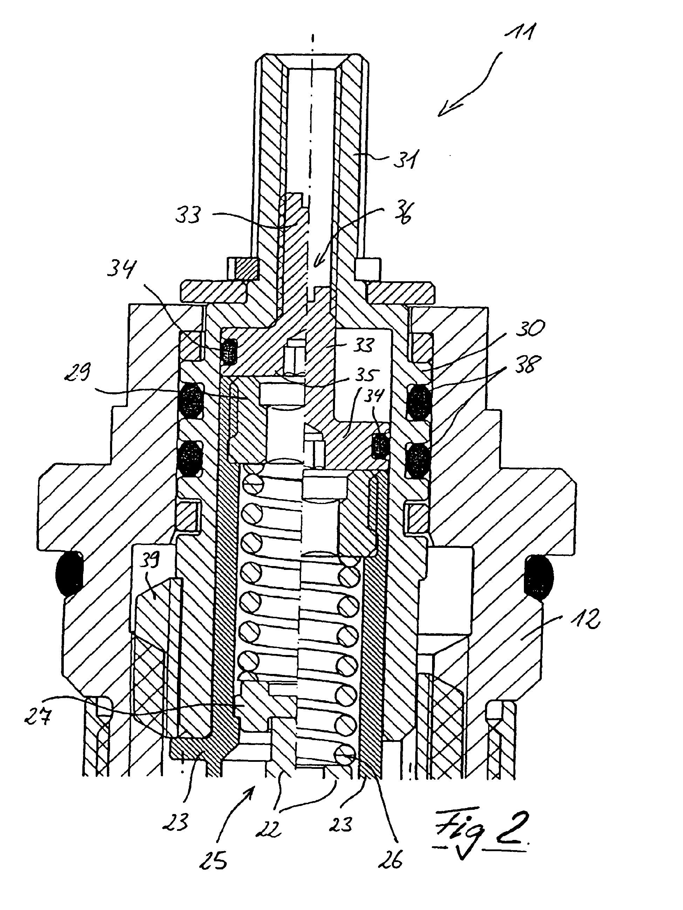

Die Figuren 1 und 2 zeigen eine erste Ausführungsform eines Thermostatventils 11 in Schnittdarstellung. Dabei zeigt die Fig. 2 einen vergrößerten Ausschnitt der Fig. 1 im Bereich der Betätigungsspindel 30, weist jedoch hinsichtlich des Anbringungsortes der Dichtung 34 an dem Anschlagkolben 35 geringe Unterschiede zu der Darstellung der Fig. 1 auf, zu denen nachfolgend noch Näheres erläutert wird.

Bei der Ausführungsform gemäß den Figuren 1 und 2 weist das Thermostatventil 11 ein Ventilgehäuse 12 auf. An dem Ventilgehäuse ist jeweils eine Zufuhr 13 für Kaltwasser und eine Zufuhr 14 für Warmwasser ausgebildet. Jede dieser beiden Zufuhren ist fluidisch mit der Mischkammer 16 verbindbar, in der sich das Warmwasser mit dem Kaltwasser vermischt und dann zu dem Auslass 15 für das Mischwasser gelangt. Die Zufuhr für das Warmwasser 14 ist von der Zufuhr für das Kaltwasser 13 über das Dichtelement 37 und das Ventilelement 18 voneinander getrennt. Das Ventilelement 18 wirkt an jedem seiner beiden Enden mit einem Ventilsitz 19a, 19b zusammen. Zwischen dem jeweiligen Ventilsitz 19a, 19b und dem Ventilelement ist ein Regelspalt 17a, 17b vorgesehen. Die Größe des Regelspaltes ist abhängig von der Position des Ventilelementes 18. Das Ventilelement 18 ist axial verschiebbar in dem Ventilgehäuse 12 angeordnet.

Die beiden Figurenhälften der Figur 1 zeigen dabei auf jeder der beiden Halbseiten unterschiedliche Ventilstellungen, die einem unterschiedlichen Zustand des Reglers entsprechen. In der rechten Bildhälfte der Fig. 1 ist die Position dargestellt, in der der Ventilsitz 19a, der der Kaltwasserzufuhr 13a zugeordnet ist, einen auf Null reduzierten Regelspalt aufweist. In der rechten Bildhälfte ist die Position dargestellt, in der der Regelspalt 18a der Kaltwasserzufuhr 13 geöffnet ist, jedoch der Regelspalt 17b für die Zufuhr 14 von Warmwasser auf Null reduziert ist, das Ventilelement 18 an dem Ventilsitz 19b anliegt.

Zur temperaturabhängigen Regelung der Position des Ventilelementes 18 dient das Regelelement 22. Das Regelelement 22 ist dabei auf der einen Seite über die Regelfeder 21 in der Abstützung 20 an dem Ventilgehäuse 12 abgestützt. Das Ventilelement 18 ist wiederum an dem Regelelement 22 gehalten. Da das Regelelement 22 von der Temperatur des Mischwassers beaufschlagt ist und in Abhängigkeit dieser längenveränderlich gestaltet ist, verändert sich die Lage des Regelelementes 22 bezüglich dem Ventilgehäuse 12 derart, dass dann, wenn das Mischwasser bezüglich der entsprechend eingestellten, durch die Temperatur-Vorwahleinrichtung 24 vorgegebenen, Wunschtemperatur zu hoch oder zu niedrig ist, jeweils das Ventilelement 18 derart axial verschoben wird, dass der Regelspalt 17a des Kaltwassers verkleinert bzw. vergrößert wird und damit gleichzeitig der Regelspalt 17b für die Zufuhr 14 des Warmwassers vergrößert bzw. verkleinert wird, so dass entsprechend der Abweichung entweder ein größerer Anteil an Warmwasser oder an Kaltwasser zugeführt wird.

Das Regelelement 22 ist seitens der Temperatur-Vorwahleinrichtung 24 in dem Federteller 27 abgestützt. Der Federteller 27 ist wiederum über eine Druckfeder 26, die gegenüber der Regelfeder 21 eine wesentlich größere Federkonstante aufweist und somit deutlich härter ist, gegenüber der Schraubbuchse 23 abgestützt. Hierzu ist der Federteller 29 als Wiederlager für die starre Druckfeder 26 an der dem Regelelement 22 abgewandten Seite der Schraubbuchse befestigt. Die beiden Federteller 27, 29 und die Druckfeder 26 bilden zusammen die Überlastsicherung 25 für das Regelelement 22. Bei hoher Belastung des Regelements 22 wird die Druckfeder 26 komprimiert, die Abstützung 28 des Regelements 22 im Federteller 27 ist nachgiebig und verhindert Überlastungen.

Die Schraubbuchse 23 ist in der Betätigungsspindel 30 gehalten. Die Betätigungsspindel 30 ist insbesondere mit dem daran ausgebildeten Griffbefestigungsschaft 31 aus dem Ventilgehäuse 12 herausgeführt, wobei zwischen Betätigungsspindel 30 und Ventilgehäuse 12 Dichtelemente 38 vorgesehen sind, um zu verhindern, dass Wasser in diesem Bereich aus dem Ventilgehäuse austritt.

Die Betätigungsspindel 30 wird dabei in dem Ventilgehäuse 12 über die Schraubmutter 39 axial verschiebbar gehalten. Die Betätigungsspindel 30 ist über den in der Zeichnung nicht dargestellten Drehgriff manuell vom Benutzer betätigbar.

Betätigt der Benutzer den Drehgriff und somit die Betätigungsspindel 30 als ein Teil der Temperatur-Vorwahleinrichtung 24 in dem Sinne, dass auslassseitig kälteres Wasser gewünscht ist, so wird die Betätigungsspindel 30 bezüglich dem Ventilgehäuse 12 verdreht. Dies führt sowohl zu einer axialen Drehbewegung der Gewindemutter 39 als auch über eine entsprechende Anschlagkante zwischen Gewindemutter 39 und Schraubbuchse 23 zu einer Veränderung der axialen Lage der Schraubbuchse 23 in dem Sinne, dass die Schraubbuchse 23 in Richtung auf den Mischwasserauslass 15 bewegt wird. Dadurch wird auch die schraubbuchsenseitige Abstützung 28 im Federteller 27 des Regelelements in Richtung auf den Mischwasserauslass 15 zu bewegt. Dadurch wird die Lage des Ventilelementes 18 derart verändert, dass die Breite des Regelspaltes für die Zufuhr von Kaltwasser 17a zugunsten der Breite des Regelspaltes 17b für die Zufuhr 14 von Warmwasser vergrößert wird und dann damit die Temperatur des Mischwassers verringert wird.

In der Betätigungsspindel 30 ist als Ventilwegbegrenzungsmittel 36 der Anschlagkolben 35 vorgesehen. Der Anschlagkolben 35 ist mittels der Stellschraube 33 in einer axial veränderbaren Lage gehalten. Die Stellschraube 33 ist dabei von außen dann zugänglich, wenn die Griffbefestigungsschraube 32 zur Befestigung des Drehgriffes an dem Griffbefestigungsschaft 31 der Betätigungsspindel 30 entfernt wurde. Durch den Griffbefestigungsschaft 31 hindurch ist es möglich, am innen liegenden Ende dieser Bohrung die Stellschraube 33 des Anschlagkolbens 35 zu halten und dadurch zu verstellen, dass von außen ein entsprechender Schraubendreher in Eingriff mit der Stellschraube 33 gebracht wird. Durch entsprechendes Einstellen der Stellschraube 33 kann die axiale Position des Anschlagkolbens 35 bezüglich der Betätigungsspindel 30 verändert werden. Je weiter der Anschlagkolben 35 in die Betätigungsspindel 30 hineinragt und damit in Richtung auf den Auslass 15 des Mischwassers bewegt ist, desto weniger weit kann die Schraubbuchse 23 in die Betätigungsspindel 30 eintauchen. Es findet über den Anschlagkolben 35 somit eine Begrenzung des möglichen Weges der Schraubbuchse 23 statt. Dadurch wird auch die hintere Endlage des Federtellers 27 und somit die hintere Endlage des Regelelementes 22 mit dem daran gehaltenen Ventilelement 18 definiert. Je weiter der Anschlagkolben 35 in die Betätigungsspindel einragt, desto größer ist der Regelspalt 17a für die Kaltwasserzufuhr 13, der geöffnet bleibt, wenn die Schraubbuchse 23 in ihrer hinteren Betätigungsendlage bleibt. Je größer der Regelspalt 17a ist, wobei gleichzeitig auch der Regelspalt 17b in seiner maximalen Größe beschränkt wird, desto größer ist der Kaltwasseranteil an dem durch den Auslass durchtretenden Mischwasser. Damit kann die maximale Temperatur des auszulassenden Mischwassers begrenzt werden, weil nämlich verhinderbar ist, dass der Regelspalt 17a für die Zufuhr 13 von Kaltwasser komplett abgeschlossen ist. Über die Einstellung der Position des Anschlagkolbens 35 kann dabei in Abhängigkeit der Vorlauftemperatur an der Warmwasserzufuhr 14 bestimmt werden, wie groß der minimale Regelspalt 17a für die Zufuhr 13 von Kaltwasser sein soll, wenn die maximale Mischwassertemperatur vorgewählt ist. Sobald die Position des Anschlagkolbens 35 einmal über die Stellschraube 33 eingestellt wurde, bleibt diese Position bezüglich der Betätigungsspindel 30 fest und verändert sich nicht mehr. Während der Benutzung des Thermostatventils ist die Stellschraube 33 von der Befestigungsschraube 32 abgedeckt, somit nicht zugänglich und vor einer versehentlichen Verstellung geschützt. Soweit vorgesehen ist, dass der Anschlagkolben 35 in eine Position verbracht werden kann, in der es möglich ist, dass die Schraubbuchse 23 so weit in die Betätigungsspindel 30 hineinragt, dass der Regelspalt 17a für die Zufuhr von Kaltwasser an dem entsprechenden Ventilsitz 19a anliegt, ist es auch möglich, die Kaltwasserzufuhr komplett abzusperren und nur Warmwasser zum Mischwasserauslass gelangen zu lassen. Dies empfiehlt sich dann, wenn die Vorlauftemperatur des zugeführten Warmwassers nicht über ein gewünschtes Maß hinausgeht. Deshalb ist es vorteilhaft, wenn eine derartige Einstellmöglichkeit des Anschlagkolbens 35 besteht. In der Fig. 1 ist diese Stellung der Schraubbuchse 23 und des Anschlagkolbens 35 in der rechten Bildhälfte dargestellt, während in der linken Bildhälfte eine Positionierung des Anschlagkolbens 35 gezeigt ist, bei der es nicht möglich ist, dass die Schraubbuchse 23 soweit in die Betätigungsspindel 30 hineintaucht, dass der Regelspalt 17a vollständig verschlossen ist.

Die gegenüber der Regelfeder 21 relativ starre Druckfeder 26 bildet das wesentliche Funktionsteil der Überlastsicherung 25, die im übrigen auch aus den beiden Abstützungen, nämlich dem Federteller 27 und 29 besteht und die in der Schraubbuchse 23 angeordnet sind. Die relativ starre Druckfeder 26 wird nämlich komprimiert und die Abstützung 28 des Regelelements 22 an der Schraubbuchse 23 gibt nach bevor eine das Regelelement 22 zerstörende axiale Kraft auf dieses einwirkt. Es wird somit verhindert, dass bezüglich dem Regelelement 22 ein unzulässiger Betriebszustand entsteht. Dies könnte beispielsweise dann gegeben sein, wenn bei sehr schneller Bewegung der Betätigungsspindel 30 gleichzeitig eine rasche Änderung des Volumenstromes des einströmenden Kaltwassers und Warmwassers erfolgt.

In der Ausgestaltung gemäß der Fig. 1 ist im Unterschied zur Ausgestaltung mit der Fig. 2 eine Dichtung 34 zwischen der Stellschraube 33 und dem Griffbefestigungsschaft 31 vorgesehen. Dieses Dichtelement dient dazu, dass verhindert wird, dass über diese Öffnung hindurch Wasser aus dem Inneren des Thermostatventils nach außen gelangt. Die Anbringung der Dichtung 34 an dieser Stelle hat den Vorteil, dass der Anschlagkolben 35 selbst sehr kurzbauend, d.h. flach ausgebildet sein kann. Im Unterschied hierzu ist in der Fig. 2 die Dichtung 34 zwischen den Anschlagkolben 35 und der Betätigungsspindel angeordnet. Die Dichtung dichtet auch hier den Wasserdurchtritt zwischen dem Inneren des Thermostatventiles 11 über die Befestigung des Ventilwegbegrenzungsmittels 36 hindurch nach außen ab. Durch die Befestigung der Dichtung 34 am Anschlagkolben 35 wird dieser länger bauend, da ein entsprechender Sitz für die Dichtung in der axialen Länge des Anschlagkolbens 35 ausgebildet sein muss. Andererseits hat diese Gestaltung den Vorteil, dass die Dichtung einen größeren Durchmesser aufweist, weniger großen mechanischen Belastungen unterliegt und leichter zu montieren ist. Sie unterliegt auch beim Einstellen weniger großen Belastungen wie die in dem Gewindebereich anzuordnende, einen sehr kleinen Durchmesser aufweisende Dichtung in der Ausgestaltung gemäß der Fig. 1.

Im Unterschied zu der Fig. 1 ist in der Fig. 2 in der linken Bildhälfte die Position des Anschlagelementes 35 gezeigt, in der der Regelspalt 17a für die Zufuhr 13 von Kaltwasser seine geringste Größe aufweist, also vorzugsweise an dem entsprechenden Ventilsitz 19a anliegen kann. In der rechten Bildhälfte ist dagegen eine Position des Anschlagkolbens gezeichnet, in der das Ventilwegbegrenzungsmittel 36, nämlich der Anschlagkolben 35 einen größeren Mindestregelspalt 17a, also einen höheren Mindestanteil an Kaltwasser im Mischwasser vorsieht. Ansonsten entsprechen die in der Zeichnung dargestellten Elemente den Elementen der Fig. 1. Sie sind mit den gleichen Bezugszeichen versehen und sind deshalb auch nicht noch einmal gesondert beschrieben. Die Funktion des Thermostatventils 11 der Fig. 2 entspricht im übrigen vollständig dem der Fig. 1.

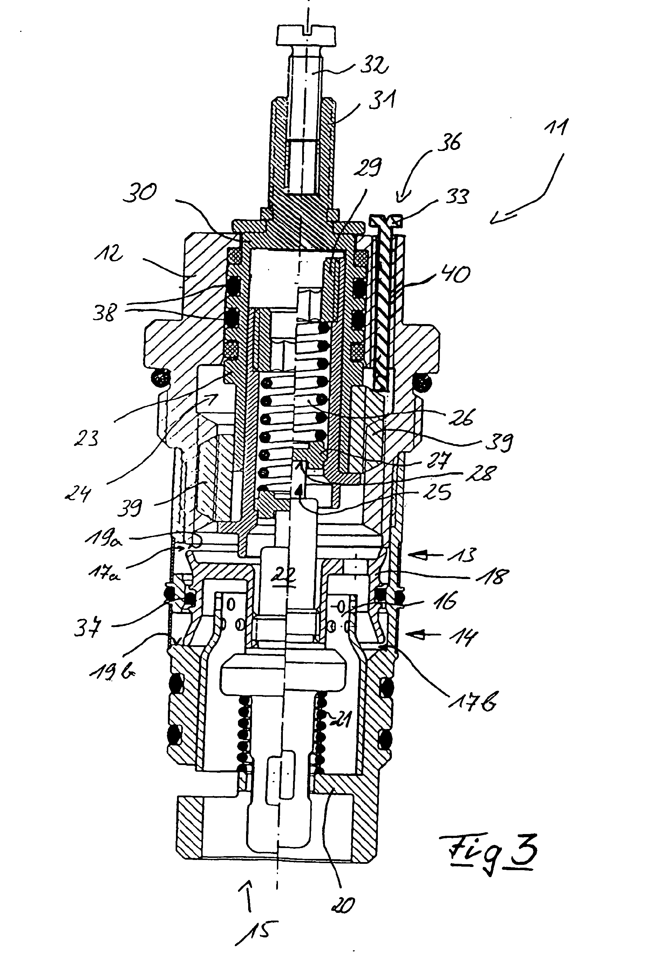

Auch die Fig. 3 zeigt ein Thermostatventil 11, das hinsichtlich seiner Funktionalität dem Thermostatventil der Fig. 1 entspricht. Auch hier wird bezüglich der Funktion des Thermostatventils und seiner Funktionselemente auf die Beschreibung der Fig. 1 verwiesen. Das Ausführungsbeispiel der Fig. 3 unterscheidet sich lediglich dahingehend, dass das Ventilwegbegrenzungsmittel 36 nicht im Bereich der Betätigungsspindel 30 angeordnet ist. Vielmehr ist die Bohrung für die Griffbefestigungsschraube 32 in dem Griffbefestigungsschaft 31 als Sacklochbohrung ausgeführt, so dass die Betätigungsspindel 30 nach außen hin geschlossen ist und lediglich im Übergang von der Betätigungsspindel 30 zum Ventilgehäuse 12 Dichtelemente 38 vorzusehen sind. Zur Begrenzung des Weges der Schraubbuchse 23 bezüglich der Betätigungsspindel 30 und somit zur Einstellbarkeit des kleinstmöglichen Regelspaltes 17a für die Zufuhr 13 von Kaltwasser dient eine durch das Ventilgehäuse 12 hindurchgeführte Bohrung 40, in die die Stellschraube 33 eingesetzt ist. Durch Hineindrehen der Stellschraube 33 ragt diese weiter in den Bewegungsraum der Gewindemutter 39 hinein. Damit wird der maximale Stellweg der Gewindemutter 39 in dem Ventilgehäuse 12 dahingehend begrenzt, dass die hintere Bewegungswegendlage durch die Stellschraube 33 bestimmt wird. Je früher die Gewindemutter 39 an der Stellschraube 33 anschlägt, desto größer ist der verbleibende Regelspalt 17a für die Zufuhr von Kaltwasser, gleichzeitig ist der maximale Regelspalt 17b für die Zufuhr von Warmwasser nach oben begrenzt, wodurch eine Höchsttemperatur des Mischwassers festlegbar ist. Sobald die Gewindemutter 39 an der Stellschraube 33 anschlägt, ist ihr Bewegungsweg beendet. Dadurch kann auch die Schraubbuchse 23, die über entsprechende Anschläge an der Gewindemutter 39 abgestützt ist, nicht mehr weiter in die Betätigungsspindel 30 eintauchen. Damit ist der Weg der Abstützung 28 bezüglich dem Ventilgehäuse nach hinten, in Richtung auf die Betätigungsspindel begrenzt. Über diesen Mechanismus wird der minimale Regelspalt 17a für die Zufuhr von Kaltwasser nach unten begrenzt.

In der linken Bildhälfte der Fig. 3 ist die Situation gezeigt, bei der der Regelspalt 17a für die Zufuhr von Kaltwasser maximal geöffnet ist, während in der rechten Bildhälfte die Situation dargestellt ist, in der die Stellschraube 33 nur soweit über die Bohrung 40 hinaus in den Bewegungsraum der Schraubmutter 39 eintaucht, dass diese soweit nach hinten gefahren werden kann, dass der Regelspalt 17a verschlossen ist. Würde die Stellschraube 33 weiter nach innen in den Bewegungsraum der Schraubmutter 39 hineinragen, würde das entsprechende Ende des Ventilelements 18 nicht mehr an dem Ventilsitz 19a anliegen, ein minimaler Regelspalt 17a für die Zufuhr von Kaltwasser würde verbleiben.

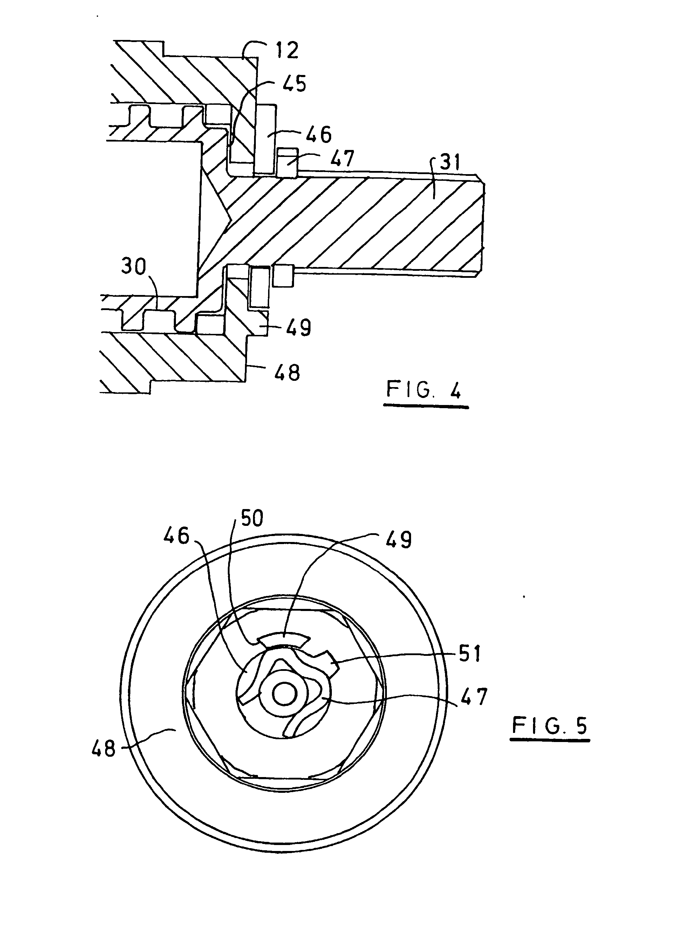

Figur 4 zeigt stark vereinfacht das eine Ende eines Thermostatventils bei einer nochmals weiteren Ausführungsform. Aus dem Gehäuse 12 ist der Schaft 31 der Schraubspindel 30 herausgeführt. Einzelheiten der Abdichtung sind nicht dargestellt. Die axiale Position der Schraubspindel wird dadurch gesichert, dass innerhalb des Gehäuses 12 die Schraubspindel 30 mit einer Schulter 45 an der Innenwand des Gehäuses 12 anliegt, und dass außerhalb in entsprechendem Abstand von der Schulter 45 eine Scheibe 46 vorhanden ist. Diese Scheibe 46 wird durch eine Klammer 47 gehalten, die in eine Nut des Schafts 31 der Schraubspindel 30 eingreift.

Die üblicherweise vorhandenen Dichtungen sind in der vereinfachten Figur 4 nicht dargestellt.

Auf der Stirnfläche 48 des Gehäuses 12 ist ein Vorsprung 49 ausgebildet, siehe auch Figur 5. Die beiden in Umfangsrichtung den Vorsprung 49 begrenzenden Stirnflächen 50 des Vorsprungs 49 bilden eine Anschlagfläche für einen Vorsprung 51 der Scheibe 46. Dieser Vorsprung 51 erstreckt sich von der in ihrem Umfang ansonsten kreisrunden Scheibe 46 radial nach außen. Dadurch ist die Verdrehung der Drehspindel 30 und damit die axiale Verschiebung der Schraubhülse 29 begrenzt. Je nach Umfangserstreckung des Vorsprungs 49 kann die Verdrehmöglichkeit der Schraubspindel 30 mehr oder weniger groß gewählt werden. Die Scheibe 46 ist wegen des Eingriffs mit der Außenverzahnung der Spindel 31 in Drehrichtung formschlüssig mit dieser verbunden. Durch Aufschieben der Scheibe 46 in unterschiedlichen Positionen lässt sich daher ebenfalls der Verstellbereich der Anordnung ändern. Dies kann auch vor Ort durchgeführt werden.

## Patentansprüche

1. Sanitäres Thermostatventil, wobei das Thermostatventil
1.1 eine Zufuhr (13) für Kaltwasser und eine Zufuhr (14) für Warmwasser sowie einen Auslass (15) für Mischwasser aufweist,
1.2 ein temperaturempfindliches Regelelement aufweist, das vom Mischwasser beaufschlagt ist,
1.3 ein von dem Regelelement (22) verstellbares Ventilelement (18) aufweist, das jeweils mit einem ortsfesten Ventilsitz (19a, 19b) für Kalt- und Warmwasser zusammenwirkt,
1.4 eine manuell betätigbare Temperatur-Vorwähleinrichtung (24) aufweist, mit der die Relativlage zwischen Regelelement (22) und Abstützung (20) des Regelements und somit die Lage des Ventilelements (18) bezüglich der Ventilsitze (19a, 19b) veränderbar ist, wobei
1.5 ein Ventilwegbegrenzungsmittel vorgesehen ist, mittels dessen der Ventilweg des Ventilelementes (18) dahingehend begrenzbar ist, dass eine maximale Temperatur des Mischwassers nicht überschritten wird, sowie mit
1.6 einer Drehspindel und einem Anschlag,
**dadurch gekennzeichnet, dass**
1.7 mit dem Schaft (31) der Drehspindel (30) eine Scheibe (46) in unterschiedlichen Positionen in Drehrichtung formschlüssig verbindbar ist, die mit dem Anschlag zur Begrenzung der Drehbewegung der Drehspindel (30) zusammenwirkt.

2. Sanitäres Thermostatventil nach Anspruch 1, **dadurch gekennzeichnet, daß** die Zuordnung zwischen Stellung der Temperatur-Vorwähleinrichtung (24) und Ventilstellung bezüglich einer Veränderung der Stellung des Ventilwegbegrenzungsmittel (36) invariant ist.

3. Sanitäres Thermostatventil nach Anspruch 1 oder 2, **dadurch gekennzeichnet, daß** die Lage des Ventilwegbegrenzungsmittels (36) einstellbar ist, wobei die Einstellbarkeit insbesondere stufenlos ist.

4. Sanitäres Thermostatventil nach einem der vorhergehenden Ansprüche, **dadurch gekennzeichnet, daß** das Ventilwegbegrenzungsmittel (36) frei von zwischen der Betätigungsspindel (30) und feststehenden Teilen wirkenden Rast- und Anschlagmitteln ist.

5. Sanitäres Thermostatventil nach einem der vorhergehenden Ansprüche, **dadurch gekennzeichnet, daß** die Verstellung des Ventilwegbegrenzungsmittels (36) koaxial zur Bewegung der Schraubbuchse (23) erfolgt.

6. Sanitäres Thermostatventil nach einem der vorhergehenden Ansprüche, **dadurch gekennzeichnet**, das das Ventilwegbegrenzungsmittel (36) eine in einer Bohrung (40) des Ventilgehäuses (12) angeordnete Stellschraube (33) aufweist.

7. Sanitäres Thermostatventil nach Anspruch 6, **dadurch gekennzeichnet, dass** die Bohrung (40) im Ventilgehäuse (12) von der Seite des Drehgriffes her bis in den Bewegungsraum einer zwischen Ventilgehäuse (12) und Betätigungsspindel (30) angeordneten Gewindemutter (39) führt, wobei die Stellschraube (33) den maximalen Bewegungsweg der Gewindemutter (40) in Richtung auf den Drehgriff begrenzt.

8. Sanitäres Thermostatventil nach einem der Ansprüche 1 bis 5, **dadurch gekennzeichnet, dass** das Ventilwegbegrenzungsmittel (36) zwischen Betätigungsspindel (30) und Schraubbuchse (23) angeordnet ist und durch das Ventilwegbegrenzungsmittel (36) der Verfahrweg der Schraubbuchse (23) derart begrenzbar ist, dass die Relativlage zwischen Regelelement (22) und Abstützung des Regelelements (22) dahingehend einstellbar ist, dass der Regelspalt (17 a, b) für die Kaltwasserzufuhr (13) nicht vollständig versperrbar ist.

9. Sanitäres Thermostatventil nach Anspruch 8, **dadurch gekennzeichnet, dass** das Ventilwegbegrenzungsmittel (36) ein innerhalb der Betätigungsspindel (30) angeordneter Anschlagkolben (35) ist.

10. Sanitäres Thermostatventil nach Anspruch 9, **dadurch gekennzeichnet, dass** der Anschlagkolben (35) am Ende einer Stellschraube ausgebildet ist, wobei die Stellschraube im Griffbefestigungsschaft (31) der Betätigungsspindel (30) gehalten ist.

11. Sanitäres Thermostatventil nach Anspruch 9 oder 10, **dadurch gekennzeichnet**, das zwischen Ventilwegbegrenzungsmittel (36) und Betätigungsspindel (30) eine Dichtung (34) vorgesehen ist.

12. Sanitäres Thermostatventil, nach einem der Ansprüche 6, 7, 10 oder 11, **dadurch gekennzeichnet, dass** die Stellschraube von außen zugänglich ist.

13. Sanitäres Thermostatventil nach einem der vorhergehenden Ansprüche, mit einer die Verstellung der Temperatur-Vorwähleinrichtung (24) begrenzenden Anschlageinrichtung an der Außenseite des Ventilgehäuses (12).

## Claims

1. A sanitary thermostat valve, whereby the thermostat valve features
1.1 an inlet (13) for cold water and an inlet (14) for hot water as well as an outlet (15) for mixed water,
1.2 a temperature-sensitive regulating element that is exposed to mixed water,
1.3 a valve element (18) that is adjustable by means of the regulating element (22) that respectively interacts with a fixed valve seat (19a, 19b) for cold and hot water,
1.4 a manually operable temperature pre-selection device (24) with which the relative position between the regulating element (22) and the support (20) of the regulating element and thus the position of the valve element (18) relative to the valve seats (19a, 19b) is variable, wherein
1.5 a valve limiting means is provided, by means of which the valve travel of the valve element (18) may be limited in that a maximum temperature of the mixed water is not exceeded, as well as
1.6 a turning spindle and a limit stop
**characterized in that**
1.7 with the shaft (31) of the turning spindle (30) is connectable in different positions in the turning direction in a form-closed manner a disc, which cooperates together with the limit stop for limiting the turning motion of the turning spindle (30).

2. A sanitary thermostat valve according to Claim 1 **characterized in that** the arrangement between the position of the temperature pre-selection device (24) and the valve position relative to a change of the position of the valve travel limiting means (36) is invariant.

3. A sanitary thermostat valve according to Claim 1 or 2 **characterized in that** the position of the valve travel limiting means (36) is adjustable, whereby the adjustability is especially continuously variable.

4. A sanitary thermostat valve according one of the preceding claims, **characterized in that** the valve travel limiting means (36) is free from catch and limit stop means acting between the operating spindle (30) and fixed parts.

5. A sanitary thermostat valve according to one of the preceding claims, **characterized in that** the adjustment of the valve travel limiting means (36) occurs coaxially to the movement of the screw sleeve (23).

6. A sanitary thermostat valve according to one of the preceding claims, **characterized in that** the valve travel limiting means (36) features a set screw (33) located in a bore (40) of the valve housing (12).

7. A sanitary thermostat valve according to Claim 6, **characterized in that** the bore (40) in the valve housing (12) leads from the side of the turning knob up to the movement space of a threaded nut (39) between the valve housing (12) and the operating spindle (30), whereby the set screw (33) limits the maximum movement distance of the threaded nut (40) in the direction towards the turning knob.

8. A sanitary thermostat valve according to one of the Claims 1 to 5, **characterized in that** the valve travel limiting means (36) is located between operating spindle (30) and screw sleeve (23) and through the valve travel limiting means (36) the travel distance of the screw sleeve (23) is limitable in a manner that the relative position between the regulating element (22) and support of the regulating element (22) is adjustable such that the regulating gap (17, a, b) for the cold water inlet (13) cannot be fully blocked.

9. A sanitary thermostat valve according to Claim 8, **characterized in that** the valve travel limiting means (36) is a limit stop piston (35) located within the operating spindle (30).

10. A sanitary thermostat valve according to Claim 9, **characterized in that** the limit stop piston (35) is formed at the end of a set screw, whereby the set screw is held within the handle fastening shaft (31) of the operating spindle (30).

11. A sanitary thermostat valve according to Claim 9 or 10, **characterized in that** between the valve travel limiting means (36) and operating spindle (30) a seal (34) is provided.

12. A sanitary thermostat valve according to one of the preceding Claims 6, 7, 10, or 11, **characterized in that** the set screw is accessible from outside.

13. A sanitary thermostat valve according to one of the preceding claims, with a limiting device that limits the adjustment of the temperature pre-selection device (24) on the outside of the valve housing (12).

## Revendications

1. Vanne thermostatique sanitaire, la vanne thermostatique sanitaire
1.1 présentant une arrivée (13) pour l'eau froide et une arrivée (14) pour l'eau chaude ainsi qu'une sortie (15) pour l'eau mixte,
1.2 présentant un élément de réglage sensible à la température, qui est en contact avec l'eau mixte,
1.3 présentant un élément de vanne (18) réglable par l'élément de réglage (22), l'élément de vanne agissant en conjonction respectivement avec un siège de vanne stationnaire (19a, 19b) pour l'eau froide et l'eau chaude,
1.4 présentant un dispositif de présélection de température (24) réglable manuellement, au moyen duquel la position relative entre l'élément de réglage (22) et le support (20) de l'élément de réglage, et donc la position de l'élément de vanne (18), est réglable par rapport aux sièges de vanne (19a, 19b),
1.5 un moyen de limitation de la course de la vanne étant prévu, au moyen duquel la course de la vanne de l'élément de vanne (19) est limitable de manière à ce qu'une température maximale de l'eau mixte ne soit pas dépassée, comprenant également
1.6 une tige tournante et un butoir,
**caractérisée en ce qu'**
1.7 un disque (46) est raccordable de manière positive à la tige (31) de la broche tournante (30) dans différentes positions dans le sens de rotation, ce disque agissant en conjonction avec la butée pour limiter le mouvement rotatif de la broche tournante (30).

2. Vanne thermostatique sanitaire selon la revendication 1, **caractérisée en ce que** l'attribution entre la position du dispositif de présélection de température (24) et la position de la vanne est invariable par rapport à une modification de la position du moyen de limitation de la course de la vanne (36).

3. Vanne thermostatique sanitaire selon la revendication 1 ou 2, **caractérisée en ce que** la position du moyen de limitation de la course de la vanne (36) est réglable, le réglage étant notamment continu.

4. Vanne thermostatique sanitaire selon l'une quelconque des revendications précédentes, **caractérisée en ce que** le moyen de limitation de la course de la vanne (36) est exempt de moyens d'encliquetage et de moyens de butée agissant entre la broche de commande (30) et des pièces fixes.

5. Vanne thermostatique sanitaire selon l'une quelconque des revendications précédentes, **caractérisée en ce que** le réglage du moyen de limitation de la course de la vanne (36) est réalisé de manière coaxiale par rapport au déplacement de la douille filetée (23).

6. Vanne thermostatique sanitaire selon l'une quelconque des revendications précédentes, **caractérisée en ce que** le moyen de limitation de la course de la vanne (36) présente une vis de réglage (33) disposée dans un alésage (40) de la cage de vanne (12).

7. Vanne thermostatique sanitaire selon la revendication 6, **caractérisée en ce que** l'alésage (40) dans la cage de vanne (12) mène du côté de la poignée tournante jusque dans l'espace de déplacement d'un écrou fileté (39) disposé entre la cage de vanne (12) et la broche de commande (30), la vis de réglage (33) limitant la course de déplacement maximal de l'écrou fileté (40) en direction de la poignée tournante.

8. Vanne thermostatique sanitaire selon l'une quelconque des revendications 1 à 5, **caractérisée en ce que** le moyen de limitation de la course de la vanne (36) est disposé entre la broche de commande (30) et la douille filetée (23) et **en ce qu'**en raison du moyen de limitation du trajet de la vanne (36) la course de déplacement de la douille filetée (23) est limitable de telle manière que la position relative entre l'élément de réglage (22) et le support de l'élément de réglage (22) est réglable de manière à ce que l'espace de réglage (17a, b) pour l'arrivée d'eau froide (13) ne soit pas complètement obturable.

9. Vanne thermostatique sanitaire selon la revendication 8, **caractérisée en ce que** le moyen de limitation de la course de la vanne (36) est un piston de butée (35) disposé à l'intérieur de la broche de commande (30).

10. Vanne thermostatique sanitaire selon la revendication 9, **caractérisée en ce que** le piston de butée (35) est formé au bout d'une vis de réglage, la vis de réglage étant maintenue dans la tige de fixation de la poignée (31) de la broche de commande (30).

11. Vanne thermostatique sanitaire selon la revendication 9 ou 10, **caractérisée en ce qu'**un joint (34) est prévu entre le moyen de limitation de la course de la vanne (36) et la broche de commande (30).

12. Vanne thermostatique sanitaire selon la revendication 6, 7, 10 ou 11, **caractérisée en ce que** la vis de réglage est accessible de l'extérieur.

13. Vanne thermostatique sanitaire selon l'une quelconque des revendications précédentes, comprenant un dispositif de butée limitant le réglage du dispositif de présélection de température (21) sur le côté extérieur de la cage de vanne (12).
